# EUROPÄISCHE PATENTSCHRIFT

(11) **EP 3 701 575 B1**
(45) Veröffentlichungstag und Bekanntmachung des Hinweises auf die Patenterteilung: **13.07.2022**
(21) Anmeldenummer: 18795367.4
(22) Anmeldetag: 22.10.2018
(51) Int. Cl.: H01M 50/172, H01M 50/183, H01M 50/186, H01M 50/191, H01M 50/528, H01M 50/529, H01M 50/543, H01M 10/052, H01M 10/0525

(54) **BATTERIEZELLE UND VERFAHREN ZUM HERSTELLEN EINER SOLCHEN**
BATTERY CELL AND PROCESS OF MANUFACTURING IT
PILE ÉLECTROCHIMIQUE ET SON PROCÉDÉ DE FABRICATION

(30) Priorität: 27.10.2017 DE 102017219316
(43) Veröffentlichungstag der Anmeldung: 02.09.2020
(73) Patentinhaber: Robert Bosch GmbH, 70442 Stuttgart (DE)
(72) Erfinder: RINGEL, Anton, 96052 Bamberg (DE)
(86) Internationale Anmeldenummer: PCT/EP2018/078849
(87) Internationale Veröffentlichungsnummer: WO 2019/081408

(56) Entgegenhaltungen:
- EP-A1- 2 752 920
- WO-A1-02/25752
- DE-T5-112013 004 468
- US-A- 4 598 466
- US-A1- 2015 111 094
- US-A1- 2015 188 100

## Beschreibung

Die vorliegende Erfindung betrifft eine Batteriezelle. Die vorliegende Erfindung betrifft ferner ein Verfahren zum Herstellen einer Batteriezelle.

### Stand der Technik

Verschiedenste Batterien, wie etwa Lithium-basierte Energiespeicher beziehungsweise Lithium-Ionen-Batterien, sind aus dem heutigen Leben kaum noch wegzudenken. Anwendungsgebiete umfassen neben vollkommen elektrisch angetriebenen Fahrzeugen oder Hybridfahrzeugen ferner elektrische Werkzeuge, elektrische Unterhaltungselektronik, Computer, Mobiltelefone und weitere Anwendungen.

Insbesondere prismatische Hardcase-Batteriezellen sind in den heutigen elektrifizierten Kraftfahrzeugen weit verbreitet. Beispielsweise in den serienproduzierten Batterien für Hybridfahrzeuge wird dieses Batterieformat eingesetzt.

WO 2016/052293 A1 beschreibt einen Klebstofffilm für einen metallischen Anschluss einer Batterie. Die Batterie umfasst ein Gehäuse, das eine Durchgangsöffnung zum Durchführen eines elektrischen Kontakts aufweist. Der Klebstofffilm ist zwischen dem Gehäuse und dem Anschluss angeordnet.

US 2014/0001654 A1 beschreibt ferner einen Klebstofffilm, der zur Herstellung von Halbleiterelementen eingesetzt wird.

### Offenbarung der Erfindung

Gegenstand der vorliegenden Erfindung ist eine Batteriezelle, aufweisend ein Gehäuse, welches eine Elektrodenanordnung mit einer Kathode und einer Anode aufnimmt, wobei das Gehäuse eine Durchgangsöffnung zum elektrischen Kontaktieren der Anode oder der Kathode aufweist, wobei die Batteriezelle ein mit der Anode oder Kathode elektrisch verbundenes Kontaktelement aufweist, wobei das Kontaktelement eine Abdeckscheibe umfasst, welche die Durchgangsöffnung vollständig abdeckt, und wobei die Abdeckscheibe durch eine Isolierfolie von dem Gehäuse getrennt ist.

Eine vorbeschriebene Batteriezelle erlaubt insbesondere eine einfache und flexible und damit adaptive Herstellbarkeit.

Die vorbeschriebene Batteriezelle umfasst ein Gehäuse, insbesondere ein Zellgehäuse, welches eine Elektrodenanordnung mit einer Kathode und einer Anode aufnimmt. Das Gehäuse kann beispielsweise zumindest teilweise aus einem Metall, wie etwa Aluminium, ausgestaltet sein, um eine ausreichende Stabilität aufzuweisen und ferner gegebenenfalls um zumindest teilweise elektrisch leitfähig zu sein, so dass das Gehäuse so etwa elektronisch mit einer der Elektroden, beispielsweise mit der Kathode verbunden werden kann.

Die Elektrodenanordnung kann ferner grundsätzlich ausgestaltet sein, wie dies für die entsprechende Batteriezelle geeignet ist und dabei grundsätzlich derart, wie es aus dem Stand der Technik etwa für prismatische Batteriezellen bekannt ist. Entsprechend kann die Elektrodenanordnung insbesondere mit einer Anode, einer Kathode und einem zwischen Anode und Kathode angeordneten Separator ausgestaltet sein. Für das nicht beschränkende Beispiel einer Lithium-Ionen-Batterie, beispielsweise, kann die Anode beispielsweise umfassen oder ausgestaltet sein aus metallischem Lithium oder aus einem Material, welches Lithiumionen einlagern beziehungsweise interkalieren und wieder auslagern beziehungsweise deinterkalieren kann. Ein derartiges Anodenmaterial kann beispielsweise auf einen Stromableiter aufgebracht, wie etwa aufgerakelt, sein. Beispielhafte Anodenmaterialien umfassen Graphit oder Lithiumtitanat. Die Kathode kann entsprechend, ebenfalls für den rein beispielhaften Fall einer Lithium-Ionen Batterie, beispielhaft Nickel-Mangan-Kobalt-Oxid (NMC) oder Lithium-Cobalt-Oxid (LiCoO₂) aufweisen oder daraus ausgestaltet sein und ebenfalls auf einen Stromableiter aufgebracht sein. Dabei kann das Kathodenmaterial wie auch das Anodenmaterial gegebenenfalls in einem Binder, wie beispielsweise Polyvinylidenfluorid (PVDF) etwa zusammen mit einem Leitzusatz, wie etwa einer elektrisch leitfähigen Kohlenstoffverbindung, beispielsweise Graphit, vorliegen.

Der Elektrolyt kann ebenfalls in an sich bekannter Weise beispielsweise ein Festkörperelektrolyt sein oder ein Lösungsmittel umfassen, in dem ein oder mehrere elektrisch leitfähige Salze gelöst sind. Beispielsweise können aprotische Lösungsmittel, wie etwa Ethylencarbonat, Propylencarbonat, Dimethylcarbonat oder Diethylcarbonat Verwendung finden. Weiterhin kann als elektrisch leitfähiges Salz Lithiumhexafluorophosphat (LiPF₆) verwendet werden. Beispielsweise kann der Elektrolyt sich in Poren des Separators befinden. Der Separator kann beispielsweise eine insbesondere poröse Kunststofffolie sein, etwa gebildet aus Polypropylen. Alternativ kann der Separator ein Festkörperseparator sein, in den ein Leitsalz eingearbeitet ist.

Der Ableiter wie etwa die Ableiterfolie kann in Abhängigkeit der Polarität in der Batteriezelle gewählt werden. Beispielsweise kann die Ableiterfolie oder können die Ableiterfolien aus Kupfer ausgestaltet sein, wenn die Ableiterfolie beziehungsweise die Elektrodenanordnung als Anode geschaltet ist. Alternativ kann die Ableiterfolie oder können die Ableiterfolien als Kupferfolie vorliegen, wenn der Ableiter beziehungsweise die Elektrodenanordnung als Kathode vorliegt.

Es ist ferner vorgesehen, dass das Gehäuse eine Durchgangsöffnung zum insbesondere externen Kontaktieren der Anode oder der Kathode aufweist. Insbesondere kann die Anode elektrisch leitend durch die Durchgangsöffnung insbesondere extern kontaktiert werden, wohingegen die Kathode mit dem Gehäuse elektrisch leitend verbunden sein kann, wie dies vorstehend angedeutet ist. Dadurch kann etwa eine gewünschte Verschaltung einer Mehrzahl an Batteriezellen ermöglicht werden.

Bei der vorstehend beschriebenen Batteriezelle ist es ferner vorgesehen, dass diese ein mit der Anode oder Kathode, insbesondere der Anode, elektrisch verbundenes Kontaktelement aufweist, das etwa aus Kupfer ausgestaltet sein kann. Somit liegt das Kontaktelement insbesondere benachbart zu der Durchgangsöffnung vor. Das Kontaktelement ist dabei derart ausgestaltet, dass es eine Abdeckscheibe umfasst, welche die Durchgangsöffnung vollständig abdeckt. In anderen Worten kann das Kontaktelement beziehungsweise seine Abdeckscheibe derart positioniert sein, dass es die Durchgangsöffnung vollständig verschließt. Hierzu kann die Abdeckscheibe etwa parallel zu dem Gehäuseteil angeordnet sein, in welchem die Durchgangsöffnung vorliegt, also etwa parallel zu einem Gehäusedeckel. Somit weist die Abdeckscheibe eine Größe auf, die größer ist, als die Größe der Durchgangsöffnung.

Ferner ist es vorgesehen, dass die Abdeckscheibe durch eine Isolierfolie von dem Gehäuse getrennt ist. Beispielsweise kann die Isolierfolie zwischen dem Gehäuse und der Abdeckscheibe eingepresst sein und/oder unmittelbar mit dem Gehäuse und dem Kontaktelement, wie insbesondere der Abdeckscheibe des Kontaktelements, in Kontakt stehen. Insbesondere kann die Isolierfolie einen mechanischen beziehungsweise elektrischen Kontakt des Kontaktelements, wie etwa seiner Abdeckscheibe, und dem Gehäuse verhindern. Dabei ist es verständlich, dass die Isolierfolie eine entsprechende Ausnehmung beziehungsweise Öffnung aufweist, um die Durchgangsöffnung nicht zu verschließen.

Eine derartige Ausgestaltung kann gegenüber den Lösungen aus dem Stand der Technik signifikante Vorteile bieten.

Insbesondere kann eine Batteriezelle kostengünstig herstellbar sein, da die zu verwendenden Komponenten und die benötigte Anlagentechnik oftmals keine hohen Kosten verursachen. Eine Folie kann beispielsweise zwischen dem Kontaktelement und dem Gehäuse angeordnet werden und beispielsweise durch Temperaturanwendung oder Druckanwendung eine Fixierung ermöglichen, etwa durch Aushärten eines Kunststoffs, der als Matrixmaterial der Folie Verwendung finden kann. Beispielsweise in dieser Ausgestaltung kann zur Anbindung des Kontaktelements eine einfache Anlagentechnik, wie etwa nur ein Niederhalter und ein Ofen notwendig sein. Grundsätzlich kann die Prozessführung einfach gehalten werden.

Ferner kann eine einfache Adaptierbarkeit an neue Zelldesigns möglich sein, da Neuentwicklungen meist unkompliziert ausgebildet und integriert werden können. Denn es kann meist auf bekannte Materialien aufgebaut werden, was eine einfache Umsetzbarkeit erlauben kann. Ferner können bei einer Anpassung der Herstellung wenig Wechselwirkungen mit anderen Bauteilen beziehungsweise Ausgestaltungen auftreten. Darüber hinaus ist eine hohe Flexibilität beziehungsweise Adaptierbarkeit gegeben, da keine Bindung an bestimmte Werkzeuge gegeben ist und ferner eine Geometriegestaltung der Isolierfolie in freier Weise möglich ist.

Ein Vorteil einer Isolierfolie kann ferner darin gesehen werden, dass diese sehr dünn ausgeführt werden kann, etwa bis zu einer Dicke von größer oder gleich 100 µm, was die Anpassbarkeit und Designfreiheit weiter verbessern kann. Darüber hinaus kann insbesondere bei einem Verpressen der Isolierfolie das Auftreten von kritischen Lufteinschlüssen verhindert werden, was die Funktionalität und Verlässlichkeit der Batteriezelle verbessern kann.

Somit sind bei einer vorbeschriebenen Batteriezelle wohl auch zukünftige Anforderungen (KPI, Key-Performance-Indikatoren) umsetzbar.

Bezüglich der Isolierfolie ist gemäß der vorliegenden Erfindung vorgesehen, dass diese aus einem Epoxidmaterial ausgebildet ist, also etwa ein Epoxidmaterial als Matrixmaterial aufweist, welches einen insbesondere anorganischen Füllstoff aufweist. Insbesondere unter Verwendung eines Epoxidmaterials, wie insbesondere eines Epoxidharzes, welches einen insbesondere anorganischen Füllstoff aufweist, lassen sich vorteilhafte Eigenschaften ermöglichen.

Eine derartige Folie, beispielsweise Laminatfolie, umfasst einen insbesondere hochvernetztem Epoxid-Kunststoff, der als solcher eine hohe Glasübergangstemperatur von bis zu ca. 180°C aufweisen kann, die weit über dem meist vorliegenden Temperaturbereich der Batterie liegt. Dadurch kann eine gute Langzeitstabilität ermöglicht werden. Die Folie beziehungsweise ihr Matrixmaterial, also der Epoxidkunststoff, umfasst insbesondere anorganische Füllstoffe, insbesondere zu einem hohen Anteil. Dadurch kann eine hohe mechanische Belastbarkeit und Medienresistenz ermöglicht werden. Gleichzeitig kann durch die Auswahl und den Anteil des Füllstoffs der thermische Ausdehnungskoeffizient an die benachbarten meist metallischen Bauteile ideal angepasst werden, wodurch mechanische Spannungen reduziert und so die Langzeitstabilität weiter verbessert werden kann.

Bezüglich des Füllstoffes kann es besonders bevorzugt sein, dass dieser in einem Anteil vorliegt von größer oder gleich 60 Gew.-% bis kleiner oder gleich 90 Gew.-%, da insbesondere in dieser Ausgestaltung zu den meist verwendeten Metallen eine gute Anpassbarkeit des thermischen Ausdehnungskoeffizienten möglich ist. Ferner kann insbesondere in dieser Ausgestaltung eine hohe mechanische Stabilität und Medienresistenz ermöglicht werden.

Alternativ oder zusätzlich kann es vorgesehen sein, dass der Füllstoff ausgewählt ist aus der Gruppe bestehend aus Siliziumdioxid (SiO₂), Aluminiumdioxid (Al₂O₃) und Bornitrid (BN). Derartige Füllstoffe können insbesondere in Hinblick auf Metalle in besonders vorteilhafter Weise den thermischen Ausdehnungskoeffizienten effektiv anpassen und ferner die mechanische Belastbarkeit und Medienresistenz verbessern.

Bezüglich einer bevorzugten Herstellbarkeit kann die beispielsweise auf Maß zugeschnittene und etwa epoxidbasierte Folie beziehungsweise Isolierfolie auf einfache Weise zwischen die Fügepartner gebracht und anschließend auf eine definierte Kraft verpresst werden. Beispielsweise im verpressten Zustand kann die Folie ausgehärtet werden, wobei Aushärtetemperaturen bis zu +180°C möglich sind. Eine derartige Vorgehensweise kann zu einer sehr robusten Verbindung führen, die zum Verbinden metallischer und polarer Polymeroberflächen geeignet ist.

Die Anforderungen an Batteriezellen hinsichtlich mechanischer Festigkeit, zuverlässiger Medienabdichtung, chemischer Medienresistenz etwa bezüglich des Elektrolyten und/oder der Feuchte, hoher thermischer Belastbarkeit und elektrischer Isolationsfähigkeit können insbesondere in dieser Ausgestaltung mit einer epoxidbasierten Folie mit insbesondere anorganischen Füllstoffen vorteilhaft abgedeckt werden.

Beispielsweise kann die Folie die unter der Bezeichnung BPM11 der Firma Nitto vertriebene Folie sein.

Weiter beispielsweise kann die Isolierfolie eine Dicke von kleiner oder gleich 200 µm, etwa in einem Bereich von größer oder gleich 100 µm bis kleiner oder gleich 200 µm, etwa in einem Bereich von größer oder gleich 130 µm bis kleiner oder gleich 160 µm, etwa von 145 µm, aufweisen. Auch bei derart geringen Dicken kann die Folie dauerhaft stabil im Temperaturbereich von -40°C bis 150°C sein, also in dem gesamten Betriebsbereich einer Batteriezelle, auch bei einem Einsatz zum Antrieb von Fahrzeugen.

Es kann ferner bevorzugt sein, dass benachbart zu der Isolierfolie ein Dichtmittel angeordnet ist. In dieser Ausgestaltung kann somit die Isolierfolie auf seine Funktion des elektrischen Isolierens begrenzt sein wohingegen eine Abdichtung durch das Dichtmittel realisiert wird. Dadurch kann eine besonders vorteilhafte Funktionalität erreicht werden. Beispielsweise kann das Dichtmittel als Dichtring ausgestaltet sein, der vor einem Verpressen auf die Isolierfolie oder unter die Isolierfolie gelegt wird und gemeinsam mit der Isolierfolie verpresst wird. Hierzu kann es vorgesehen sein, dass der Dichtring beidseitig in einer Nut aufgenommen wird, also etwa in einer Nut des Gehäuses und in einer Nut des Kontaktelements beziehungsweise der Abdeckscheibe. Beispielsweise kann ein Dichtring aus Polyphenylensulfid (PPS) verwendet werden. Eine Anordnung des Dichtmittels benachbart zu der Isolierfolie soll dabei insbesondere bedeuten, dass das Dichtmittel etwa die Isolierfolie berührend ebenfalls zwischen dem Gehäuse und der Abdeckscheibe angeordnet, etwa eingepresst, ist.

Nicht erfindungsgemäß ist die Abdeckscheibe gemeinsam mit der Isolierfolie an der Außenseite des Gehäuses angeordnet ist. In dieser Ausgestaltung kann innerhalb des Gehäuses Bauraum eingespart werden, was die volumetrische Ausnutzung der Zelle erhöhen kann.

Ferner kann das Kontaktelement nach dem Schließen des Gehäuses positioniert werden, was herstellungstechnisch Vorteile mit sich bringen kann.

Gemäß der vorliegenden Erfindung ist die Abdeckscheibe gemeinsam mit der Isolierfolie an der Innenseite des Gehäuses angeordnet. In dieser Ausgestaltung kann beispielsweise eine besonders hohe Sicherheit der Batteriezelle ermöglicht werden, da bei einem Überdruck innerhalb der Zelle, der etwa durch eine Fehlfunktion hervorgerufen werden kann, die Abdeckscheibe gegen die Öffnung gepresst wird und so weiter abdichtet. Dabei kann es ferner ermöglicht werden, dass Druckspannungen bei einem hohen Druck im Inneren des Zellgehäuses von der Folie aufgenommen beziehungsweise abgemildert werden.

Es kann ferner bevorzugt sein, dass das Kontaktelement aus der Abdeckscheibe besteht. In dieser Ausgestaltung kann ein besonders einfacher Aufbau des Kontaktelements ermöglicht werden, was Produktionsprozesse vereinfachen und Kosten senken kann.

Weiterhin kann es bevorzugt sein, dass das Kontaktelement T-förmig ausgestaltet ist und neben der Abdeckscheibe einen beispielsweise einteilig mit der Abdeckscheibe ausgebildeten Kontaktbolzen aufweist, der etwa durch die Durchgangsöffnung verlaufen kann. In dieser Ausgestaltung kann insbesondere die elektrische Kontaktierung einer Elektrode verbessert werden. Wenn beispielsweise das Abdeckelement außen am Gehäuse angeordnet ist, kann die Elektrode auf einfache Weise an den Kontaktbolzen angebunden, beispielsweise angeschweißt, werden. Insoweit beispielsweise das Abdeckelement innen am Gehäuse angeordnet ist, kann ein externer Anschluss auf einfache Weise an den Kontaktbolzen angebunden werden.

Hinsichtlich weiterer Vorteile und technischer Merkmale der Batteriezelle wird auf die Beschreibung des Verfahrens zum Herstellen einer Batteriezelle, auf die Figuren und die Figurenbeschreibung verwiesen.

Gegenstand der vorliegenden Erfindung ist ferner ein Verfahren zum Herstellen einer Batteriezelle, insbesondere einer Batteriezelle wie vorstehend beschrieben, aufweisend die Verfahrensschritte:
a) Bereitstellen eines Gehäuses, welches eine Elektrodenanordnung mit einer Kathode und einer Anode aufnimmt, wobei das Gehäuse eine Durchgangsöffnung zum elektrischen Kontaktieren der Anode oder der Kathode aufweist;
b) Bereitstellen eines Kontaktelements mit einer Abdeckscheibe, wobei die Durchgangsöffnung durch die Abdeckscheibe vollständig abdeckbar ist, und
c) Anordnen des Kontaktelements benachbart zu der Durchgangsöffnung derart, dass die Abdeckscheibe die Durchgangsöffnung vollständig abdeckt; wobei
d) zwischen der Abdeckscheibe und dem Gehäuse eine Isolierfolie angeordnet wird, insbesondere wobei als Isolierfolie eine derartige Folie verwendet wird, die aus einem Epoxidmaterial ausgebildet ist; und wobei
e) die Isolierfolie zwischen der Abdeckscheibe und dem Gehäuse verpresst wird, insbesondere wobei
das Verfahren den weiteren Verfahrensschritt aufweist:
f) Aushärten der Isolierfolie.

Dabei kann es beispielsweise vorgesehen sein, dass als Isolierfolie eine derartige Folie verwendet wird, die aus einem Epoxidmaterial ausgebildet ist, und/oder dass das Verfahren den weiteren Verfahrensschritt aufweist: f) Aushärten der Isolierfolie. Beispielsweise kann der Verfahrensschritt f) während oder nach dem Verfahrensschritt e) ablaufen. Der Härtungsschritt kann dabei abhängig sein von dem verwendeten Matrixmaterial der Isolierfolie und ist für den Fachmann ohne weiteres nachvollziehbar.

Es ist für den Fachmann unmittelbar verständlich, das die Isolierfolie eine Ausnehmung beziehungsweise eine Öffnung aufweist, welche das Durchtreten beispielsweise eines Teils des Kontaktelements ermöglicht.

Durch ein derartiges Verfahren kann auf einfache Weise eine langzeitstabile Batteriezelle erzeugt werden. Insbesondere kann ein adaptives und flexibles Verfahren ermöglicht werden, durch welches Batteriezellen mit einem ausgezeichneten Anforderungsprofil erzeugt werden können.

Zusammengefasst bietet das vorstehend beschriebene Verfahren die Schaffung einer Lösung mit beispielsweise einer Laminatfolie als Isoliermittel, die eine Funktionsintegration schafft, welche konventionellen Lösungen überlegen ist und die Erfüllung aktuell gesetzter Anforderungen für zukünftige Batteriezellen ermöglicht.

Das Verfahren ermöglicht eine vergleichsweise sehr kostengünstige Ausgestaltung und ferner eine entscheidende Agilität bei Änderungen im Produkt. Letzteres ermöglicht kurze Entwicklungszeiten.

Hinsichtlich weiterer Vorteile und technischer Merkmale des Verfahrens zum Herstellen einer Batteriezelle wird auf die Beschreibung der Batteriezelle, auf die Figuren und die Figurenbeschreibung verwiesen.

Weitere Vorteile und vorteilhafte Ausgestaltungen der erfindungsgemäßen Gegenstände werden durch die Zeichnungen veranschaulicht und in der nachfolgenden Beschreibung erläutert, wobei die beschriebenen Merkmale einzeln oder in einer beliebigen Kombination ein Gegenstand der vorliegenden Erfindung sein können, insoweit sich aus dem Kontext nicht eindeutig das Gegenteil ergibt. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Schnittansicht durch eine erste Ausgestaltung einer Batteriezelle von der Seite;
- Fig. 2: eine schematische Draufsicht auf die Ausgestaltung aus Fig. 1;
- Fig. 3: eine schematische Schnittansicht durch eine weitere Ausgestaltung einer Batteriezelle von der Seite;
- Fig. 4: eine schematische Draufsicht auf die Ausgestaltung aus Fig. 3;
- Fig. 5: eine schematische Schnittansicht durch eine weitere Ausgestaltung einer Batteriezelle von der Seite;
- Fig. 6: eine schematische Draufsicht auf die Ausgestaltung aus Fig. 5;
- Fig. 7: eine schematische Schnittansicht durch eine weitere Ausgestaltung einer Batteriezelle von der Seite;
- Fig. 8: eine schematische Draufsicht auf die Ausgestaltung aus Fig. 7;
- Fig. 9: eine schematische Schnittansicht durch eine weitere Ausgestaltung einer Batteriezelle von der Seite;
- Fig. 10: eine schematische Draufsicht auf die Ausgestaltung aus Fig. 9;
- Fig. 11: eine schematische Schnittansicht durch eine weitere Ausgestaltung einer Batteriezelle von der Seite;
- Fig. 12: eine schematische Draufsicht auf die Ausgestaltung aus Fig. 11;
- Fig. 13: eine schematische Schnittansicht durch eine weitere Ausgestaltung einer Batteriezelle von der Seite;
- Fig. 14: eine schematische Ansicht von seriell verschalteten Batteriezellen gemäß der Ausgestaltung aus Fig. 13, und;
- Fig. 15: eine schematische Ansicht von parallel verschalteten Batteriezellen gemäß der Ausgestaltung aus Fig. 13

Im Folgenden werden verschiedene Ausgestaltungen von Batteriezellen gemäß der Erfindung gezeigt. Dabei sollen gleiche Bezugszeichen gleiche oder vergleichbare Bauteile beschreiben. Dabei ist zu beachten, dass insbesondere die Größenverhältnisse für eine bessere Verständlichkeit angepasst wurden und nicht als beschränkend zu verstehen sind.

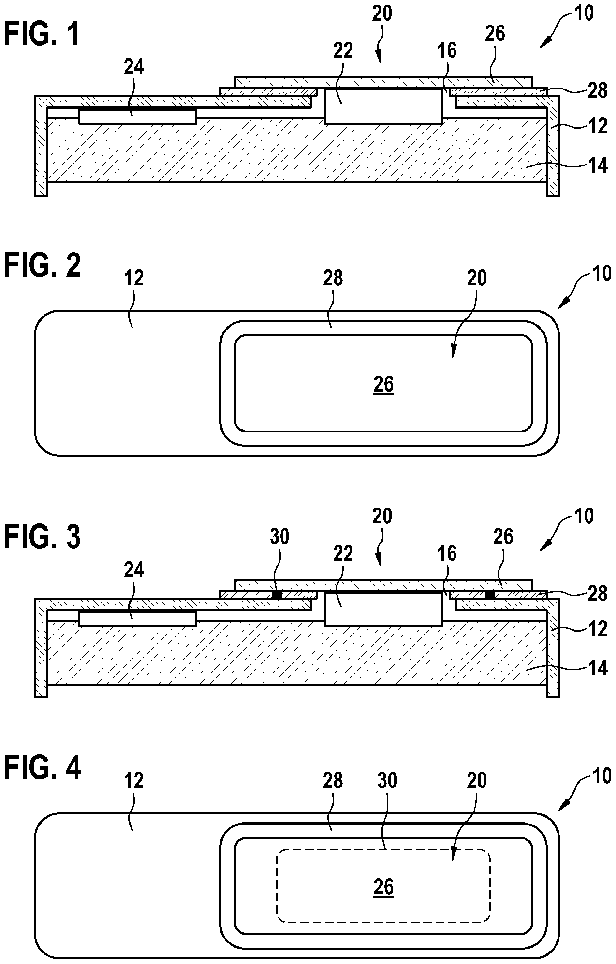

In der Figur 1 eine schematische Schnittansicht durch eine erste Ausgestaltung einer Batteriezelle 10 von der Seite gezeigt.

Es ist gezeigt, dass die Batteriezelle 10 ein etwa aus Aluminium gefertigtes Gehäuse 12 aufweist, welches eine Elektrodenanordnung 14 aus einer Kathode und einer Anode aufnimmt. Das Gehäuse 12 umfasst eine Durchgangsöffnung 16 zum Kontaktieren der Anode oder der Kathode. Das Gehäuse 12 kann dabei einteilig ausgestaltet sein. Dabei ist es ferner vorgesehen, dass die Batteriezelle 10 ein mit der Anode oder Kathode elektrisch verbundenes Kontaktelement 20 aufweist.

Im Detail ist das Kontaktelement 20 mit der Anode beziehungsweise deren Ableiterfahne 22 der elektrisch verbunden wie etwa verschweißt, wohingegen das Gehäuse 12 mit der Kathode beziehungsweise deren Ableiterfahne 24 elektrisch verbunden wie etwa verschweißt ist.

Bezüglich des Kontaktelements 20 zeigen Figur 1 und 2, dass dieses eine Abdeckscheibe 26 umfasst, welche die Durchgangsöffnung 16 vollständig abdeckt, wobei die Abdeckscheibe 26 durch eine Isolierfolie 28 von dem Gehäuse 12 getrennt ist. Dabei zeigt Figur 1, dass die Abdeckscheibe 26 gemeinsam mit der Isolierfolie 28 an der Außenseite des Gehäuses 12 angeordnet ist.

In den Figuren 3 und 4 ist eine zu den Figuren 1 und 2 korrespondierende Ausgestaltung einer Batteriezelle 10 gezeigt wobei es jedoch vorgesehen ist, dass benachbart zu der Isolierfolie ein Dichtmittel 30, wie insbesondere ein Dichtring, vorgesehen ist. Unabhängig von der konkreten Ausgestaltung kann es vorgesehen sein, dass das Dichtmittel 30 zwischen dem Gehäuse 12 und der Abdeckscheibe 26 angeordnet ist.

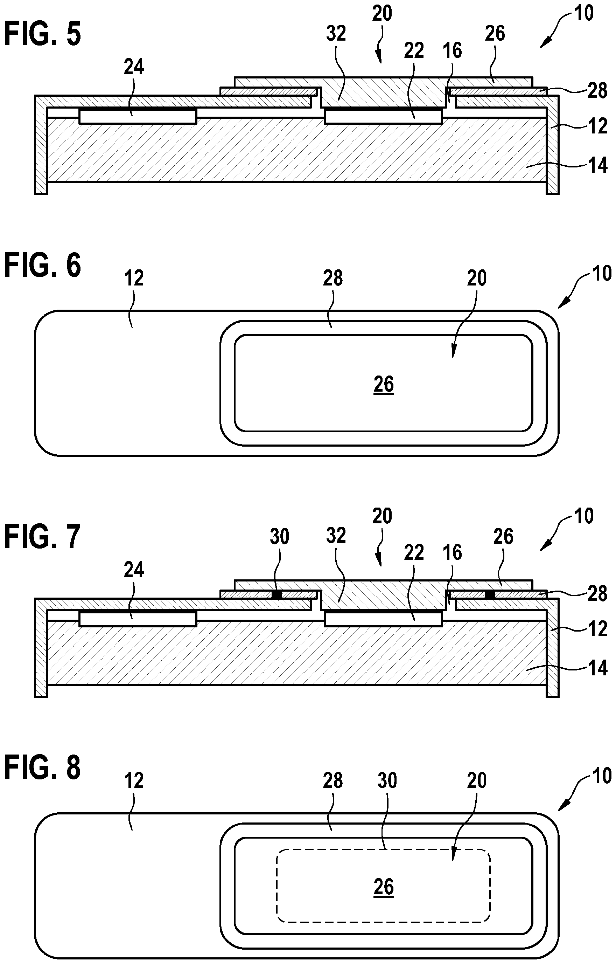

In den Figuren 5 und 6 ist eine Ausgestaltung der Batteriezelle 10 gezeigt, in der die Abdeckscheibe 26 gemeinsam mit der Isolierfolie 28 an der Außenseite des Gehäuses 12 angeordnet ist und ferner das Kontaktelement 20 T-förmig ausgestaltet ist und neben der Abdeckscheibe 26 einen Kontaktbolzen 32 aufweist, der durch die Durchgangsöffnung 16 verläuft und an dem die Ableiterfahne 22 fixiert, beispielsweise angeschweißt, ist.

In den Figuren 7 und 8 ist eine zu den Figuren 5 und 6 korrespondierende Ausgestaltung einer Batteriezelle 10 gezeigt wobei es jedoch vorgesehen ist, dass benachbart zu der Isolierfolie 28 ein Dichtmittel 30, wie insbesondere ein Dichtring, vorgesehen ist.

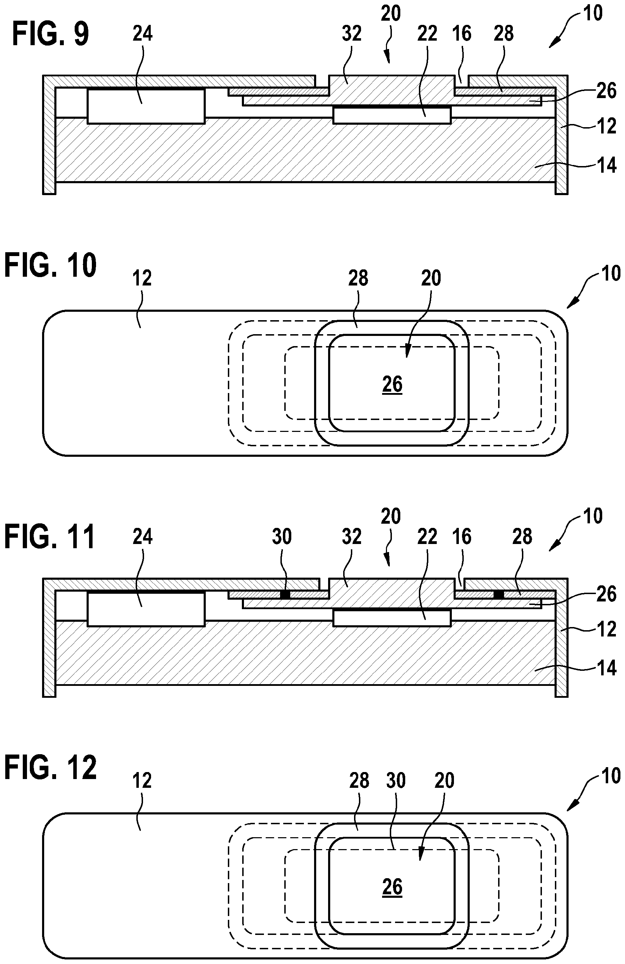

In den Figuren 9 und 10 ist eine Ausgestaltung der Batteriezelle 10 gezeigt, in der die Abdeckscheibe 26 gemeinsam mit der Isolierfolie 28 an der Innenseite des Gehäuses 12 angeordnet ist und ferner das Kontaktelement 20 T-förmig ausgestaltet ist und neben der Abdeckscheibe 26 einen Kontaktbolzen 32 aufweist, der durch die Durchgangsöffnung 16 verläuft.

In den Figuren 11 und 12 ist eine zu den Figuren 9 und 10 korrespondierende Ausgestaltung einer Batteriezelle 10 gezeigt wobei es jedoch vorgesehen ist, dass benachbart zu der Isolierfolie 28 ein Dichtmittel 30, wie insbesondere ein Dichtring, vorgesehen ist.

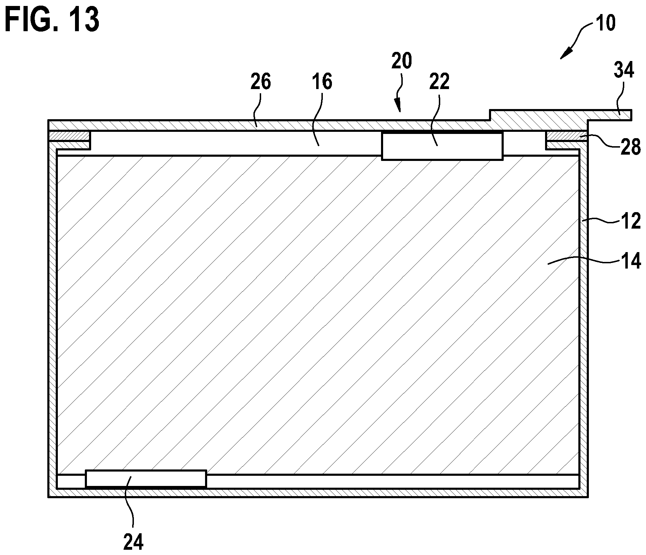

In der Figur 13 ist eine Ausgestaltung einer Batteriezelle 10 gezeigt, bei der die Abdeckscheibe 26 den Deckel des Gehäuses 12 ausbildet. Somit ist die Durchgangsöffnung 16 in dieser Ausgestaltung im Wesentlichen der gesamte Deckelbereich. Dadurch kann das Potential des Deckels von dem des weiteren Gehäuses 12 getrennt werden, was auf Modulebene weitere Integrationsmöglichkeiten erlauben kann. Dies ist beispielsweise durch Spritzguss oder mittels Klebetechnologie nicht oder nur bedingt umsetzbar. Dabei ist an der Abdeckscheibe 26 eine etwa mit dem Kontaktelement 20 verschweißte Kontaktbrücke 34 angeordnet, um eine Mehrzahl von Batteriezellen 10 zu verschalten.

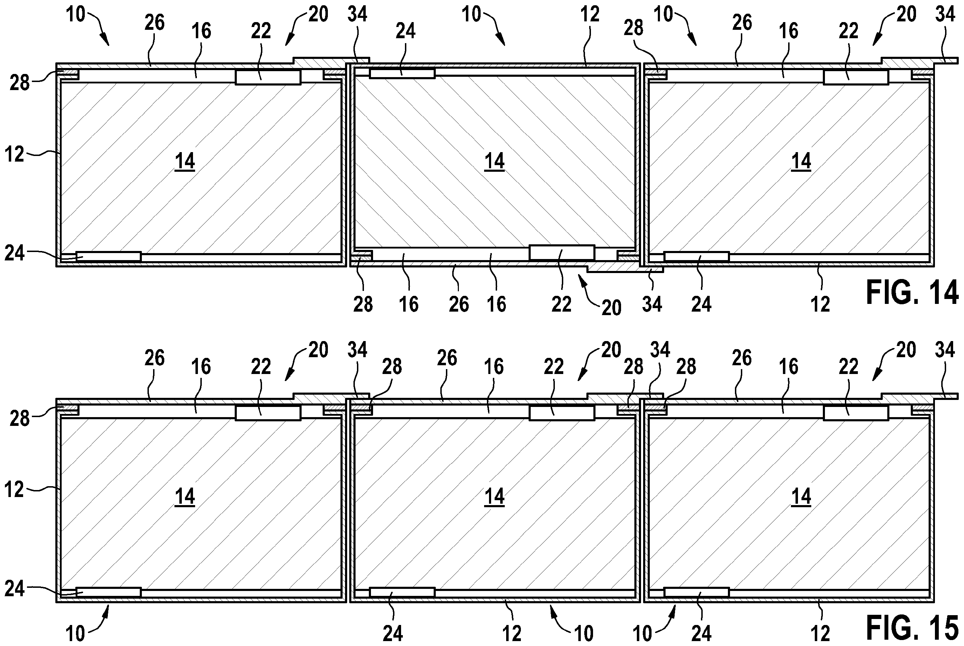

Letzteres ist in den Figuren 14 und 15 gezeigt, wobei Figur 14 eine serielle Verschaltung zeigt und wobei Figur 15 eine parallele Verschaltung zeigt.

## Patentansprüche

1. Batteriezelle, aufweisend ein Gehäuse (12), welches eine Elektrodenanordnung (14) mit einer Kathode und einer Anode aufnimmt, wobei das Gehäuse eine Durchgangsöffnung (16) zum elektrischen Kontaktieren der Anode oder der Kathode aufweist, weiter aufweisend ein mit der Anode oder Kathode elektrisch verbundenes Kontaktelement (20), wobei das Kontaktelement (20) eine Abdeckscheibe (26) umfasst, welche die Durchgangsöffnung (16) vollständig abdeckt, wobei die Abdeckscheibe (26) durch eine Isolierfolie (28) von dem Gehäuse (12) getrennt ist, **dadurch gekennzeichnet, dass** die Isolierfolie (28) aus einem Epoxidmaterial ausgebildet ist, welches einen Füllstoff aufweist, wobei die Abdeckscheibe (26) gemeinsam mit der Isolierfolie (28) an der Innenseite des Gehäuses (12) angeordnet ist.

2. Batteriezelle nach Anspruch 1, **dadurch gekennzeichnet, dass** der Füllstoff in einem Anteil vorliegt von größer oder gleich 60 Gew.-% bis kleiner oder gleich 90 Gew.-%.

3. Batteriezelle nach einem der Ansprüche 1 bis 2, **dadurch gekennzeichnet, dass** der Füllstoff ausgewählt ist aus der Gruppe bestehend aus SiO₂, Al₂O₃, BN.

4. Batteriezelle nach einem der Ansprüche 1 bis 3, **dadurch gekennzeichnet, dass** benachbart zu der Isolierfolie (28) ein Dichtmittel (30) vorgesehen ist.

5. Batteriezelle nach einem der Ansprüche 1 bis 4, **dadurch gekennzeichnet, dass** das Kontaktelement (20) aus der Abdeckscheibe (26) besteht.

6. Batteriezelle nach einem der Ansprüche 1 bis 4, **dadurch gekennzeichnet, dass** das Kontaktelement (20) T-förmig ausgestaltet ist und neben der Abdeckscheibe (26) einen Kontaktbolzen (32) aufweist.

7. Verfahren zum Herstellen einer Batteriezelle (10), insbesondere einer Batteriezelle (10) gemäß einem der Ansprüche 1 bis 6, aufweisend die Verfahrensschritte:
a) Bereitstellen eines Gehäuses (12), welches eine Elektrodenanordnung (14) mit einer Kathode und einer Anode aufnimmt, wobei das Gehäuse (12) eine Durchgangsöffnung (16) zum elektrischen Kontaktieren der Anode oder der Kathode aufweist;
b) Bereitstellen eines Kontaktelements (20) mit einer Abdeckscheibe (26), wobei die Durchgangsöffnung (16) durch die Abdeckscheibe (26) vollständig abdeckbar ist, und
c) Anordnen des Kontaktelements (20) benachbart zu der Durchgangsöffnung (16) derart, dass die Abdeckscheibe (26) die Durchgangsöffnung (16) vollständig abdeckt; wobei
d) zwischen der Abdeckscheibe (28) und dem Gehäuse (12) eine Isolierfolie (28) angeordnet wird, insbesondere wobei als Isolierfolie (28) eine derartige Folie verwendet wird, die aus einem Epoxidmaterial ausgebildet ist; und wobei
e) die Isolierfolie (28) zwischen der Abdeckscheibe (26) und dem Gehäuse (12) verpresst wird, insbesondere wobei
das Verfahren den weiteren Verfahrensschritt aufweist:
f) Aushärten der Isolierfolie (28).

## Claims

1. Battery cell comprising a housing (12) which accommodates an electrode arrangement (14) having a cathode and an anode, wherein the housing has a passage opening (16) for electrically contacting the anode or the cathode, further comprising a contact element (20) which is electrically connected to the anode or cathode, wherein the contact element (20) comprises a covering disc (26) which completely covers the passage opening (16), wherein the covering disc (26) is separated from the housing (12) by an insulating film (28), **characterized in that** the insulating film (28) is formed from an epoxy material which comprises a filler, wherein the covering disc (26), together with the insulating film (28), is arranged on the inner side of the housing (12).

2. Battery cell according to Claim 1, **characterized in that** the filler is present in a proportion of greater than or equal to 60% by weight to less than or equal to 90% by weight.

3. Battery cell according to either of Claims 1 and 2, **characterized in that** the filler is selected from the group consisting of SiO₂, Al₂O₃ and BN.

4. Battery cell according to one of Claims 1 to 3, **characterized in that** a sealing means (30) is provided adjacent to the insulating film (28).

5. Battery cell according to one of Claims 1 to 4, **characterized in that** the contact element (20) consists of the covering disc (26).

6. Battery cell according to one of Claims 1 to 4, **characterized in that** the contact element (20) is of T-shaped configuration and has a contact pin (32) next to the covering disc (26).

7. Method for producing a battery cell (10), in particular a battery cell (10) according to one of Claims 1 to 6, comprising the method steps of:
a) providing a housing (12) which accommodates an electrode arrangement (14) having a cathode and an anode, wherein the housing (12) has a passage opening (16) for electrically contacting the anode or the cathode;
b) providing a contact element (20) having a covering disc (26), wherein the passage opening (16) can be completely covered by the covering disc (26); and
c) arranging the contact element (20) adjacent to the passage opening (16) in such a way that the covering disc (26) completely covers the passage opening (16); wherein
d) an insulating film (28) is arranged between the covering disc (28) and the housing (12), in particular wherein a film that is formed from an epoxy material is used as the insulating film (28); and wherein
e) the insulating film (28) is pressed between the covering disc (26) and the housing (12), in particular wherein
the method comprises the further method step of:
f) curing the insulating film (28).

## Revendications

1. Elément de batterie, présentant un boîtier (12) qui reçoit un ensemble d'électrodes (14) pourvu d'une cathode et d'une anode, le boîtier présentant une ouverture de passage (16) pour la mise en contact électrique de l'anode ou de la cathode, présentant en outre un élément de contact (20) relié électriquement à l'anode ou à la cathode, l'élément de contact (20) comprenant une plaque de recouvrement (26) qui recouvre entièrement l'ouverture de passage (16), la plaque de recouvrement (26) étant séparée du boîtier (12) par un film isolant (28),
**caractérisé en ce que** le film isolant (28) est réalisé en matériau époxy qui présente une matière de remplissage, la plaque de recouvrement (26) étant disposée conjointement avec le film isolant (28) sur la face intérieure du boîtier (12).

2. Elément de batterie selon la revendication 1, **caractérisé en ce que** la matière de remplissage est présente en une quantité allant de supérieure ou égale à 60 % en poids à inférieure ou égale à 90 % en poids.

3. Elément de batterie selon l'une quelconque des revendications 1 à 2, **caractérisé en ce que** la matière de remplissage est sélectionnée dans le groupe composé de SiO₂, Al₂O₃, BN.

4. Elément de batterie selon l'une quelconque des revendications 1 à 3, **caractérisé en ce qu'**un moyen d'étanchéité (30) est prévu de manière adjacente au film isolant (28).

5. Elément de batterie selon l'une quelconque des revendications 1 à 4, **caractérisé en ce que** l'élément de contact (20) est composé de la plaque de recouvrement (26).

6. Elément de batterie selon l'une quelconque des revendications 1 à 4, **caractérisé en ce que** l'élément de contact (20) est configuré en forme de T et présente un boulon de contact (32) à côté de la plaque de recouvrement (26).

7. Procédé de fabrication d'un élément de batterie (10), en particulier d'un élément de batterie (10) selon l'une quelconque des revendications 1 à 6, présentant les étapes de procédé consistant à :
a) prévoir un boîtier (12) qui reçoit un ensemble d'électrodes (14) pourvu d'une cathode et d'une anode, le boîtier (12) présentant une ouverture de passage (16) pour la mise en contact électrique de l'anode ou de la cathode ;
b) prévoir un élément de contact (20) pourvu d'une plaque de recouvrement (26), l'ouverture de passage (16) pouvant être recouverte entièrement par la plaque de recouvrement (26), et
c) disposer l'élément de contact (20) de manière adjacente à l'ouverture de passage (16) de telle sorte que la plaque de recouvrement (26) recouvre entièrement l'ouverture de passage (16) ; dans lequel
d) un film isolant (28) est disposé entre la plaque de recouvrement (28) et le boîtier (12), en particulier dans lequel on utilise comme film isolant (28) un film qui est réalisé en matériau époxy ; et dans lequel
e) le film isolant (28) est comprimé entre la plaque de recouvrement (26) et le boîtier (12), en particulier dans lequel le procédé présente l'étape de procédé supplémentaire consistant à :
f) faire durcir le film isolant (28).
